# EUROPEAN PATENT SPECIFICATION

(11) **EP 1 223 015 B1**
(45) Date of publication and mention of the grant of the patent: **09.01.2008**
(21) Application number: 02075939.5
(22) Date of filing: 07.08.1997
(51) Int. Cl.: B29B 15/12, C03C 25/10

(54) **Chemical treatments for fibers and wire-coated composite strands for molding fiber-reinforced thermoplastic composite articles**
Chemische Behandlung für Fasern und drahtbeschichtete Verbundwerkstoffstränge zum Formen von faserverstärkten thermoplastischen Verbundwerk-Stoffgegenständen
Traitements chimiques de fibres et de fils composites enrobés pour le moulage d'articles composites thermoplastiques renforcés par des fibres

(30) Priority: 12.08.1996 US 695504; 12.08.1996 US 695909
(43) Date of publication of application: 17.07.2002
(62) Divisional of application: 97936451.0
(73) Proprietor: OWENS CORNING, Toledo, Ohio 43659 (US)
(72) Inventor: Woodside, Andrew B., Pickerington, Ohio 43147 (US)
(74) Representative: Jacob, Reuben Ellis

(56) References cited:
- EP-A- 0 657 395
- EP-A- 0 657 396
- WO-A-97/17304
- GB-A- 706 832
- US-A- 4 530 860
- US-A- 5 104 703

## Description

### FIELD AND INDUSTRIAL APPLICABILITY OF THE INVENTION

The invention relates to applying a chemical treatment to fibers which are suitable for processing into a composite. More particularly, the invention relates to applying a chemical treatment to fibers where the chemical treatment has a low viscosity and is substantially free of an unreactable solvent. Even more particularly, the invention relates to using heat energy to lower the viscosity and improve the wetting ability of a chemical treatment after being applied to the fibers and/or to increase the molecular weight of or cure the applied chemical treatment with very little, if any, generation of volatile organic carbon (VOC).

### BACKGROUND OF THE INVENTION

Fibers or fibrous materials are often used as reinforcements in composite materials. Glass and other ceramic fibers are commonly manufactured by supplying the ceramic in molten form to a bushing, drawing fibers from the bushing, applying a chemical treatment, such as a size, to the drawn ceramic fibers and then gathering the sized fibers into a tow or strand. There are basically three known general types of chemical treatmentssolvent-based systems, melt-based systems and radiation cure-based systems.

In a broad sense, the solvent-based chemical treatments include organic materials that are in aqueous solutions (i.e., dissolved, suspended, or otherwise dispersed in water), as well as those that are dissolved in organic solvents. U.S. Patents Nos. 5,055,119, 5,034,276 and 3,473,950 disclose examples of such chemical treatments. The solvent (i.e., water, organic solvent, or other suitable solvent) is used to lower the viscosity of the chemical treatment to facilitate wetting of the glass fibers. The solvent is substantially unreactable with the other constituents of the chemical treatment and is driven out of the chemical treatment after the wetting of the glass fibers. In each process for applying solvent-based chemical treatments, an external source of heat or some other device external to the fibers is used to evaporate or otherwise remove the water or other solvent from the applied chemical treatment, leaving a coating of organic material on the glass fibers. One drawback to a solvent-based process is that the added step of removing the solvent increases production costs. In addition, some organic solvents are very flammable in vapor form and pose a fire hazard. Another problem with solvent-based systems is that it is very difficult, if not impossible, to remove all of the solvent from the applied chemical treatment. Therefore, solvent-based chemical treatments are limited, as a practical matter, to those systems where any residual solvent left behind in the coating of organic material remaining on the fibers will not have a significantly adverse affect.

With prior melt-based chemical treatments, thermoplastic-type organic solids are melted and applied to the glass fibers. U.S. Patents Nos. 4,567,102, 4,537,610, 3,783,001 and 3,473,950 disclose examples of such chemical treatments. One disadvantage of prior melt-based processes is the energy costs associated with melting the chemical treatments. The organic solids used with prior melt-based systems are melted at relatively high temperatures in order for the melted organic solids to be applied to the glass fibers. The high temperatures are needed because the organic solids used in the past have relatively high molecular weights. Such high melt temperatures also pose the risk to workers of being burned by the equipment used to melt the plastic material and by the molten plastic material itself. In addition, specialized equipment is typically needed to apply and otherwise handle the high-temperature molten plastic material.

The radiation cure-based chemical treatments are typically acrylate-based organic chemicals, either with or without a solvent, which are cured with ultraviolet radiation via a photoinitiator. U.S. Patents Nos. 5,171,634 and 5,011,523 disclose examples of such chemical treatments. A major disadvantage to processes using such chemical treatments is that the radiation used, such as ultraviolet radiation, and the chemical treatment used, such as acrylates, are relatively hazardous, often requiring special handling and safety precautions. Some of these processes, such as that disclosed in U.S. Patent No. 5,171,634, require the radiation curing to be repeated a number of times to obtain the maximum benefit. Each additional radiation-curing step increases the risks involved and adds additional cost to the process. Furthermore, radiation-curable thermoset plastics, and their requisite photoinitiators, represent a highly specialized area of thermoset chemistry. As a consequence, such radiation-cured chemical treatments are expensive and not generally compatible with various classes of matrix resins.

Document GB-A-706832 discloses all the features of the preamble of claim 1. Document EP-A-657395 discloses the preamble of independent claim 14.

In order to fabricate composite parts, the strands of glass fibers are often further chemically treated in an off-line impregnation process with a polymeric resin. The resin can be a thermoset, either one- or two-part, or a thermoplastic. In one example, previously formed and sized continuous glass fibers are impregnated with a thermosetting resin and then pulled through a heated pultrusion die to cure the resin and make the composite article, such as ladder rails. In such an off-line process, the continuous glass fibers must be separated in some manner to allow impregnation of the resin between the fibers and then recombined. This requirement almost always results in the use of additional hardware such as spreader bars, impregnation baths, and drying or curing ovens. These types of processes have the disadvantage that they add cost and complexity to the process. In addition, the resultant extra handling of the glass fibers can cause breakage of the individual glass filaments, and thereby a degradation in the properties of the composite article. Therefore, while such off-line processes may be effective, they are time-consuming and inefficient (e.g., requiring additional process steps) and, thus, expensive.

Accordingly, there is a need in the art for a safer, more efficient and more cost-effective process for applying a chemical treatment to glass fibers, where the viscosity of the chemical treatment is low enough to sufficiently wet the glass fibers without the need for a solvent, where the chemical treatment does not require radiation curing and the viscosity of the applied chemical treatment increases with very little, if any, generation of water, volatile organic carbon (VOC) or other solvent vapor, and where the resulting chemically treated glass fibers are suitable for subsequent processing into a composite article.

### SUMMARY OF THE INVENTION

An object of the invention is to attain a chemical treatment for fibers, such as glass fibers, that is substantially free of unreactable solvent. Another object is to achieve a solvent-free chemical treatment that is substantially non-photosetting. An additional object of the invention is to provide such a chemical treatment that has an enhanced wetting ability. A further object is to provide a solvent-free chemical treatment that may be cured or have its viscosity reduced through application of heat energy to the chemical treatment coated on fibers.

Such objects are achieved via, inter alia, a method for preparing a composite product, the method comprising the steps of: applying a thermosetting composition to a plurality of fibers including glass or synthetic reinforcing fibers to form fibers coated with applied composition, the composition being substantially solvent-free and substantially non-photosetting; and heating the applied chemical treatment so as to lower the viscosity of at least a portion of the applied composition or cure at least partially the applied composition, or both, to form coated fibers, wherein the energy used in heating the composition is completely provided by heat energy emanating from the plurality of fibers. The composition may be applied in an amount of from about 0.1% to about 1% by weight to size the plurality of fibers, or in an amount of from about 2% to about 25% by weight to preimpregnate the plurality of fibers. The fibers may further include polymeric matrix fibers. In one preferred embodiment, the reinforcing fibers include glass reinforcing fibers and the heating step comprises supplying heat energy to the applied chemical treatment emanating from the glass reinforcing fibers, with the glass reinforcing fibers being at a temperature preferably of from 150°C to 350°C, more preferably of from 200°C to 300°C, during the applying step. The reinforcing fibers may include preformed reinforcing fibers, with the method further comprising the step of pre-heating the preformed reinforcing fibers. In one preferred embodiment, the chemical treatment is thermosetting and the heating step cures at least partially a portion of the applied chemical treatment. Alternatively, the chemical treatment is thermoplastic and the heating step lowers the viscosity of at least a portion of the applied chemical treatment. The method may further comprise a step of gathering the coated fibers together into a composite . strand, and the heating step may occur after the gathering step. The chemical treatment may contain an organic material, with the composite strand having an organic material content of from about 2% to about 25% by weight. The method may also include the step of forming the composite strand into a composite article having the plurality of fibers disposed in a matrix formed at least in part by the applied chemical treatment. The plurality of fibers optionally includes polymeric matrix fibers forming at least part of the matrix of the composite article. The forming step may be performed in-line with the gathering step. Additionally, the reinforcing fibers and matrix fibers may be commingled to provide the plurality of fibers. The applying step may involve simultaneously coating the reinforcing fibers and the matrix fibers with the chemical treatment.

Additionally, the invention relates to a thermosetting composition for applying to fibers for processing into a composite strand useful for disposing in a matrix to form a fiber-reinforced composite article by a method as described above. The thermosetting composition comprises a film former comprising at least one of a multi-functional monomer and a low molecular weight mono-functional monomer. The film former comprises a monomer selected from polyester alkyds, vinyl esters, amic acid, Diels Alder reactive species and Cope rearranging compounds. The composition further comprises a coupling agent comprising a functionalised organic substrate. The composition is at least partially curable, substantially solvent-free, and substantially non-photosetting.

The composition may comprise a processing aid. The processing aid may include an epoxy-functional viscosity modifier or butoxyethylstearate. Preferably, the composition is heat curable at a temperature of 150 to 350°C. The composition has preferably a viscosity of up to about 300 cps at a temperature of 93 to 110°C.

Other objects, features, and advantages of the various aspects of the present invention will become apparent from the detailed description of the invention and its preferred embodiments in conjunction with the appended drawings.

### BRIEF DESCRIPTION OF DRAWINGS

Figure 1 is a perspective view of one embodiment of an apparatus for chemically treating fibers continuously formed from a molten material and suitable for making a composite article.
Figure 2 is a perspective view of another embodiment of a system for chemically treating fibers, where a heat retainer is disposed between a fiber-forming mechanism and a chemical-treatment applicator.
Figure 3 is a perspective view of an additional embodiment of an apparatus for chemically treating fibers continuously formed from a molten material and preformed fibers pulled from packages.

### DETAILED DESCRIPTION AND

### PREFERRED EMBODIMENTS OF THE INVENTION

### SOLVENT-FREE CHEMICAL TREATMENTS

One general aspect of the invention relates to essentially solvent-free chemical treatments for applying to fibers to be processed into composite articles. One or more chemical treatments can be applied to the fibers, such as with one or more conventional applicators, so as to size and/or preimpregnate a sufficient number of the reinforcing fibers to obtain the composite properties desired.

More particularly, fibers or filaments are sized and/or preimpregnated with a chemical treatment. The chemical treatment has a low viscosity, is substantially free of an unreactable solvent, and is not cured by actinic radiation. The low viscosity may be obtained by choosing relatively low molecular weight constituents for the chemical treatment.

Heat energy may be used to lower the viscosity and improve the wetting ability of the chemical treatment after the treatment is applied to the fibers. Additionally or alternatively, heat energy may be used to increase the molecular weight of, or otherwise cure (i.e., crosslink or otherwise increase the molecular weight of), the applied chemical treatment.

There is little, if any, generation of water vapor, volatile organic carbon (VOC) vapor, or other solvent vapor.

The resulting chemically treated fibers are suitable for forming a composite strand, e.g., a preimpregnated strand ("prepreg"). The composite strand may be subsequently processed in-line or off-line into a composite article having reinforcing fibers disposed in a polymeric matrix material.

An apparatus suitable for making one or more composite strands in thread or pellet form suitable for being molded into a fiber-reinforced thermoplastic composite article includes a source of reinforcing fibers and, optionally, a source of one or more other types of fibers. One such source is a bushing of molten reinforcing material (e.g., glass) from which continuous reinforcing fibers can be drawn in sufficient numbers to form at least a portion, if not all, of the strand. It may also be desirable for the source of reinforcing fibers to be one or more spools or other packages of preformed reinforcing fibers. A source of preformed reinforcing fibers may be used in combination with a source of continuously formed reinforcing fibers. The source of fibers can also include matrix fibers that are continuously produced, for example, from a bushing or spinner and/or are preformed and provided in suitable packaging, such as spools.

Where glass reinforcing fibers are being formed, the fiber-forming mechanism forms the fibers from a source of molten glass fiber material, such as a conventional glass fiber-forming bushing. The fiber-forming operation may be conducted off-line from or in-line with the balance of the apparatus. When the fibers being formed are glass reinforcing fibers, the fiber-forming mechanism forms the fibers from a source of molten glass reinforcing fiber material. The fiber-forming mechanism forms the fibers such that they emanate heat energy for a time after being formed.

An applicator is used for applying the chemical treatment to substantially all of the fibers. The applicator can be of a conventional or any other construction suitable for applying the desired type and amount of chemical treatment. The applicator may be disposed in-line with the fiber-forming mechanism for applying a chemical treatment to the fibers to form a plurality of coated fibers. The applicator applies the chemical treatment, which is substantially free of solvent and substantially non-photosetting.

The apparatus includes an applicator system that applies the chemical treatment when the fibers are at a higher temperature than that of the applied chemical treatment. When the chemical treatment is applied, the fibers are at a sufficiently higher temperature to provide enough heat energy to cause the applied chemical treatment to lower its viscosity or heat cure at least partially (e.g., if the chemical treatment is a thermoset), or both. The temperature of the fibers when the chemical treatment is applied, however, is not sufficient to cause significant decomposition of the applied chemical treatment. The difference in the temperatures of the applied chemical treatment and the fibers on which the treatment is being applied may be obtained by including a heat retainer as part of the applicator system. This difference in temperatures may also be obtained by disposing the applicator close enough (e.g., adjacent) to the fiber-forming mechanism so that the fibers are at a sufficiently higher temperature than the chemical treatment when it is applied. Such an applicator system may include a heat retainer disposed so as to help maintain the temperature of the fibers, or at least reduce the rate of temperature drop, during and/or after the chemical treatment is applied.

A gathering shoe or some other gatherer or bundler is used to gather the treated fibers together into at least one strand. The strand may then be coated or encased with a suitable polymeric material, preferably a thermoplastic, and formed into the desired composite article.

The material used to coat or encase the chemically treated strand can be provided from a source of molten thermoplastic material, such as from an extruder. To coat the treated strand and form an encased composite strand, the treated strand may be pulled or otherwise passed through a suitable coating device. For example, encased composite strands can be formed by pulling or otherwise passing a number of the strands through a corresponding number of dies, with each die having at least one exit orifice sized to form the coating into a thermoplastic sheath of the desired thickness (e.g., that yielding a thermoplastic-to-glass weight ratio of from about 30:70 to about 70:30).

Preferably, a wire coater is used to encase the strands. A wire coater is a device or group of devices capable of coating one or more strands with a plastic material so as to form a sheath of relatively uniform thickness on each strand. Preferably, the wire coater includes some form of a die that shapes the sheath to the desired uniform thickness and/or cross-section.

The strand is fed or passed through the coating device using a suitable device. For example, a puller may be used to pull the strand through the wire coater. This puller can be separate from or part of the wire coater. A chopper may be adapted to also function as a puller or aid the puller in pulling the strand through the wire coater.

The resulting coated or encased composite strand can be cut or otherwise separated into discrete lengths to form a plurality of encased composite pellets, or wound or otherwise packaged to form an encased composite thread. The chemical treatment helps keep the fibers together in each polymer-encased composite pellet or thread.

A composite article can be made by molding one or more of the encased composite strands, e.g., in pellet, thread, or other form. The sheaths of the encased composite strands form at least part, and may form all, of the matrix of the composite article to be molded. Exemplary molding processes used to form the composite article include injection molding, compression molding, and other suitable molding techniques.

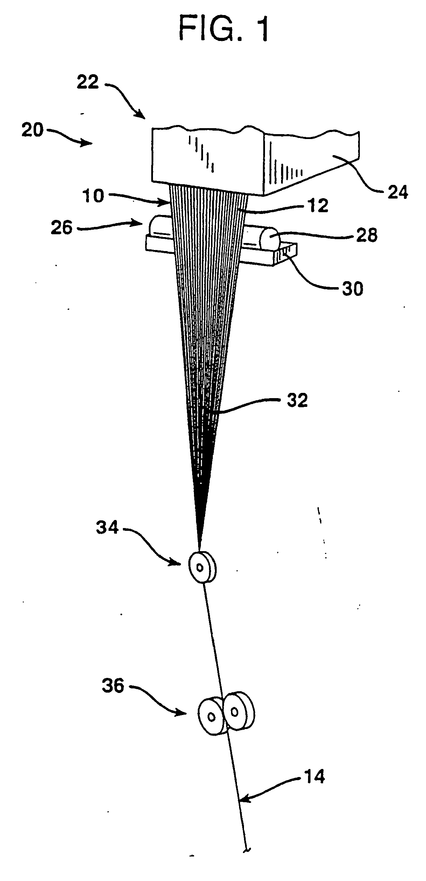

Figs. 1-3 illustrate a preferred embodiment for chemically treating a plurality of fibers 10 suitable for making a composite article. A typical composite article comprises a plurality of reinforcing fibers 12 disposed in a matrix of polymeric material.

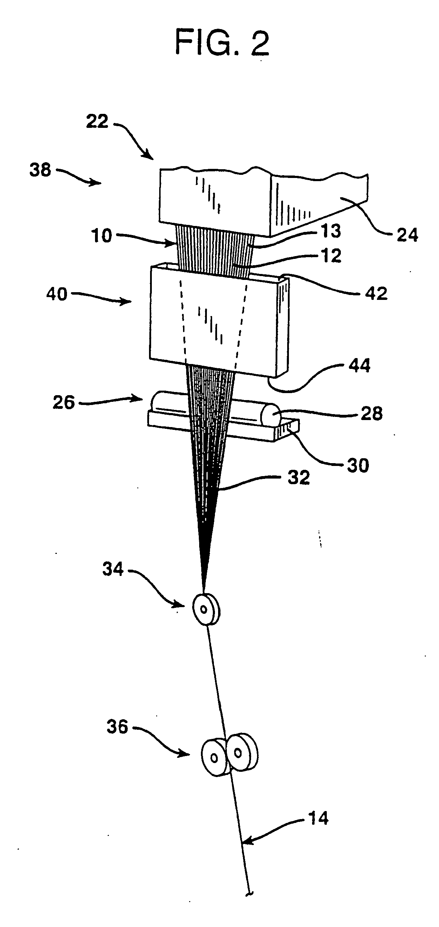

In addition to reinforcing fibers 12, the fibers 10 may also include other types of fibers suitable for making a composite article, such as matrix fibers 13. The matrix fibers 13 are preferably made from a polymeric matrix material and form at least part of the matrix. The reinforcing fibers 12 may be glass, which may be continuously drawn from a source of molten glass reinforcing material (e.g., a conventional glass fiber-forming bushing as shown in Figs. 1 and 2). Continuously formed glass reinforcing fibers are especially advantageous since heat energy remaining in the glass fibers from the forming process may be employed to efficiently provide heat to the applied chemical treatment. In addition to or instead of using continuously formed glass fibers, the reinforcing fibers 12 may include preformed reinforcing fibers made from glass and/or synthetic reinforcing materials.

The term "preformed" refers to fibers that are formed off-line before being supplied or provided with a chemical treatment in accordance with the present invention. The term "glass" means an inorganic product of fusion that solidifies to a rigid, noncrystalline condition upon cooling, and is intended to include common silicate glasses as well as glassy mineral materials suitable for making reinforcing fibers, such as borosilicate glass, glass wool, rock wool, slag wool, and mineral wool. Contrastingly, "synthetic" reinforcing materials are non-glass materials, such as Kevlar^{®}, carbon or graphite, silicon carbide (SiC), and other non-glass materials having suitable reinforcing characteristics. When fibers made from different materials are used, it is contemplated that the same or a different chemical treatment can be used for each type of fiber.

In one embodiment, the chemical treatment is applied according to methods and using apparatus which use heat energy to effect at least one of two changes in the applied chemical. Heat energy may be used to lower the viscosity, which improves the wetting ability of a chemical treatment that has been applied to the fibers. Alternatively or additionally, heat energy may be used to increase the molecular weight of, or otherwise cure, the applied chemical treatment. Figs. 1 and 2 depict exemplary embodiments of apparatus and methods for applying the chemical treatments.

The chemical treatment used to coat fibers 10 has a relatively low molecular weight and viscosity compared to the matrix material, and is also substantially free of an unreactable solvent. An "unreactable solvent" (e.g., water and certain organic solvents) is a solvent that evaporates out of the chemical treatment in the presence of heat energy rather than reacts with a constituent of the chemical treatment or the matrix material. The chemical treatment is substantially "solvent-free"--i.e., essentially free of such a substantially unreactable solvent. Thus, there may be traces of an unreactable solvent in the chemical treatment, but the amount of the solvent present is not enough, by itself, to significantly lower the viscosity of the chemical treatment (i.e., affect the ability of the chemical treatment to wet the fibers). In addition, the applied chemical treatment is sufficiently free of any unreactable solvents such that no substantial amount of water vapor, VOC vapor, or other solvent vapor is generated when the chemical treatment is heated, including during molding of the composite article. By being solvent-free, the present chemical treatment can have its viscosity reduced and/or be heat-cured without experiencing a substantial drop in mass. Thus, most of the chemical treatment that is applied to the fibers 10 remains on the fibers.

That the chemical treatment is solvent-free, however, does not preclude the use of one or more additives in the chemical treatment that are soluble or compatible with the other ingredients (e.g., the coupling agent). For example, a compatible viscosity modifier, such as a HELOXY^{®} (epoxy functional modifier) product available from Shell Chemical Company, e.g., a diglycidyl ether of 1,4-butanediol (HELOXY Modifier 67) or a polyglycidyl ether of castor oil (HELOXY Modifier 505), can be used in a film-former system to interact or react one or more other ingredients to lower the viscosity of the chemical treatment, instead of being driven off in the form of a vapor when in the presence of heat energy.

The chemical treatment is also not curable by actinic radiation (i.e., is non-photosetting) to any substantial degree. That is, the chemical treatment does not photochemically react to cure or significantly increase in viscosity due to the effect of actinic radiation.

The chemical treatment, which is thermosetting in nature, is used for sizing and/or preimpregnating the number of reinforcing fibers 12 needed to obtain the composite properties desired. The chemical treatment may also be used for sizing and/or preimpregnating other types of fibers 10, such as fibers 13 made from a polymeric matrix material.

Matrix fibers may be either continuously formed in-line or preformed, and are subsequently used to form part or all of the matrix of the composite article. Where matrix fibers are used, the step of applying the chemical treatment can include sizing and/or preimpregnating the matrix fibers with the same or a different chemical treatment than that applied to the reinforcing fibers.

In most cases preimpregnation as well as sizing is desired, and therefore it is preferable for the same chemical treatment to be used for both sizing and preimpregnating the fibers 10. Optionally, however, one chemical treatment may be used to size the reinforcing and/or matrix fibers, and another chemical treatment may be used to preimpregnate the reinforcing and/or matrix fibers. If different types of matrix fibers are used, it may be preferable for a different chemical treatment to be applied to each type of matrix fiber.

Sizing fibers involves applying at least a monolayer of the chemical treatment onto the surface of each fiber. Glass reinforcing fibers 12 are generally considered sized when a chemical treatment content of from 0.1 % to 1%, e.g., on the order of about 0.5%, by weight based on the total weight of the treated fibers, is applied onto the fibers 12. Preimpregnating involves coating or otherwise applying a sufficient amount of the chemical treatment to a plurality of fibers to substantially fill in the spaces between the fibers when the fibers 10 are formed into a bundle or strand 14. A bundle or strand 14 of glass reinforcing fibers 12 is generally considered preimpregnated when the strand 14 has a chemical treatment content of from about 2% to about 25% by weight.

The fibers may be sized without being preimpregnated at the same time, for example, when the chemical treatment is applied in a low quantity and/or when it has a sufficiently low viscosity. The viscosity of a chemical treatment may be adjusted by adjusting its temperature. For example, the viscosity of the treatment may be suitably adjusted after it is applied by employing the heat present in the fiber.

Preferably at least the reinforcing fibers 12 of the strand fibers 10 are coated with a chemical treatment in an amount of from about 2% to about 15% by weight, more preferably from about 5% to about 15% by weight, and even more preferably with about 8% by weight (based on the weight of the treated fibers). A conventional loss on ignition (LOI) method can be used to determine how much of the applied chemical treatment is on the fibers 12, which are preferably glass.

A preferred LOI range or value is the one that gives the desired composite strand properties at the lowest cost. At an LOI value of 8%, sample strands 14 have been found to be well impregnated but not wet to the touch. LOI values that are too low may cause fuzzing of the strand 14 (i.e., breakage of a number of individual glass fibers in the strand) in subsequent in-line or off-line processing and handling. But the more chemical treatment added, the more the final product will cost. Higher LOI values may also bleed low viscosity components out of the strand 14. In any event, an LOI value of from about 25% to about 40% by weight is preferred for making a composite article with all the matrix polymer being provided by the composite strand 14.

Thus, fibers 10 can be chemically treated in accordance with the present invention to form a prepreg (preimpregnated composite strand) 14, or a composite strand 14 that contains only sized fibers 10. One or more of the composite strands 14 can be subsequently processed, in-line or off-line, into a variety of composite articles. For example, the step of forming the composite strand may be accomplished in-line with a gathering step. Exemplary composite articles into which a strand 14 may be formed include a mat, fabric, sheet, panel, filament-wound pipe, pultruded article (pultrusion), or spray-up article (gun roving). The strands 14 may also be chopped into lengths or pellets suitable for use in injection or other molding processes to form composite articles.

A chemical treatment according to the present invention comprises a film former and a coupling agent. The film former forms a layer of polymeric material around each fiber coated with the chemical treatment. The coupling agent helps bond or otherwise couple the film former to at least the reinforcing fiber. The coupling agent, if appropriate, can also be chosen to help the film former react or interact with the polymeric matrix material.

The applied chemical treatment behaves as a thermoset. Also, the treatment can have both thermosetting and thermoplastic components--e.g., the treatment may contain a substantially thermoplastic polymer with reactive end groups that can participate in a thermosetting/curing reaction. The film former used in either type of chemical treatment may be the same polymeric material as that used for the composite matrix.

A thermosetting-type chemical treatment is partially or fully heat-curable and substantially non-photosetting, and may be used with a polymeric matrix material that is either a thermoset or is thermoplastic. If the chemical treatment behaves as a thermoset, applied heat energy may at least partially cure and cause an increase in the viscosity of at least the portion of the applied chemical treatment being cured. A preferred chemical treatment is heat-curable at temperatures of about 350°C (662°F) and below.

In thermosetting-type chemical treatments, the film former preferably comprises either one or more relatively low molecular weight mono-functional monomers, one or more relatively low or high molecular weight multi-functional monomers, or a combination thereof. A mono-functional monomer has one reaction site per molecule, while a multi-functional monomer has two or more reaction sites per molecule. The monomer is heat-curable without generating a substantial amount of water vapor, volatile organic carbon vapor, or other solvent vapor. The film former used in a thermosetting-type chemical treatment includes at least one low molecular weight functional monomer from the group including a polyester alkyd vinyl ester, amic acid, Diels Alder reactive species (such as dienes or dieneophiles), and molecules that can undergo Cope rearrangement. The molecular weight of the functional monomers is suitably low compared to the matrix material to obtain a chemical treatment having a low viscosity.

The chemical treatment behaves as a thermoset and a step of heating is preferably used to at least partially cure the applied chemical treatment and cause an increase in the viscosity of at least the portion of the applied chemical treatment being cured (i.e., the part most directly exposed to the heat). This increase in viscosity can be caused by an increase in molecular weight as the thermoset-type chemical treatment cures. The thermosetting-type film former is heat-curable without generating a substantial amount of solvent vapor when heated. Preferably, the functional monomers used for the film former are heat-curable at temperatures of about 350°C (662°F) and below, because the risk of permanent degradation increases to an undesirable degree for many chemical treatments at temperatures of above about 350°C (662°F).

The viscosity of either type of chemical treatment is low enough to at least partially, if not fully, wet the fibers 10 when the chemical treatment is initially applied. To be able to apply the chemical treatment using conventional equipment (e.g., with a standard single- or dual-roll applicator 26) without causing the fibers 10, in particular glass fibers, to break in significantly high numbers, the chemical treatment preferably has a viscosity of about 1000 cps or less before being applied. The lower the viscosity of the chemical treatment being applied, the faster the fibers 10 can be processed without causing significant fiber breakage. Thus, more preferably the chemical treatment before being applied has a viscosity of about 300 cps or less. In a preferred embodiment for advantageous processing of the fibers 10, the chemical treatment as it is applied has a viscosity on the order of about 50 cps, more preferably of about 10 cps, as measured by a conventional viscometer (e.g., a Brookfield or ICI viscometer).

The following are specific examples of film formers divided into two main categories: liquid and meltable. In the "liquid" category, there are three examples of maleate-based film formers that have been synthesized. In addition, there are twelve epoxy-based film formers prepared from commercially available ingredients. There is another liquid film former (allyl propoxylate urethane) which can be used in either a thermoset-type or a thermoplastic-type chemical treatment. In the "meltable" category there are two film-former systems, each prepared from a commercially available polycaprolactone and one of the liquid film formers. The exemplary polycaprolactone system is a solid polymer at room temperature. These exemplary film formers are all processable in accordance with the present invention.

### Examples 1- 6: Liquid Film Formers

### Example I-Propyleneglycol-Fumarate: (not according to Claim 14)

A conventional ten-gallon (38 L) stainless steel reactor was charged with 17.02 kg of propylene glycol (available from Ashland Chemical Company of Columbus, Ohio) and 12.98 kg of fumaric acid (available from Huntsman Specialty Chemical of Salt Lake City, Utah). For stability, 3.62 g (120 ppm) of toluhydroquinone (THQ) (available from Aldrich Chemical Company of Milwaukee, Wisconsin) was added into the reactor. The molar ratio of the charge was 2:1 propylene glycol (PG) to fumaric acid (FA). The mixture was heated under a nitrogen atmosphere at 380°F (193°C) for five hours. The endpoint of the reaction was determined by the viscosity of the PG-FA product, which was 360 to 450 cps at 120°F (49°C) as determined by a cone-and-plate viscometer, such as that made by ICI of Wilmington, Delaware. The acid value at the reaction endpoint is typically observed to be 10 to 36 Meq KOH/g of alkyd (milliequivalent of potassium hydroxide per gram of alkyd). This material may be used directly as a film former.

### Example 2-Propoxylated Bisphenol-A-Maleate:

A 50-gallon (189 L) stainless steel reactor was charged with 159.68 kg of propoxylated bisphenol-A (available from Milliken Chemical of Inman, South Carolina) and 20.33 kg of maleic anhydride (available from Huntsman Specialty Chemical). For stability, 18 g (100 ppm) of hydroquinone (HQ) (available from Aldrich Chemical Company) was added to the reactor. The mixture was heated under a nitrogen atmosphere at 175°F (79°C) for 2.5 hours, then at 275°F (135°C) for 3.5 hours. The endpoint of this reaction was determined by acid value-the reaction was considered to be complete when the acid value reached a level of 63.6 Meq KOH/g of alkyd and no more maleic anhydride was observed by infrared spectroscopy. The viscosity of this product ranges from 100 to 130 cps at a temperature of 200°F (93°C) as measured by an ICI cone-and-plate viscometer. This material may be used directly as a film former.

### Example 3-Propoxlated Allyl Alcohol-Maleate:

A 15-gallon (57 L) stainless steel reactor was charged with 15.49 kg of propoxylated allyl alcohol (available from Arco Chemical Company of New Town Square, Pennsylvania) and 9.88 kg of maleic anhydride (available from Huntsman Specialty Chemical). For stability, 2.53 g (100 ppm) of HQ was added to the reactor. The mixture was heated under a nitrogen atmosphere at 250-300°F (121-149°C) for four hours. The reaction endpoint was when the acid value reached a level of 263.4 Meq KOH/g of alkyd and no more maleic anhydride was observed by infrared spectroscopy. The viscosity of this product ranges from 100-130 cps at a temperature of 200°F (93°C) as measured by an ICI cone-and-plate viscometer. This material may be used directly as a film former.

### Examples 4A-K-Low-Viscosity Epoxy Systems: (not according to Claim 14)

A typical epoxy-based film former contains one or more epoxies that are available from Shell Chemical Company, e.g., EPON Resin 8121, EPON Resin SU-2.5, EPON Resin 160, HELOXY Modifier 62 (cresyl glycidyl ether), HELOXY Modifier 67 (diglycidyl ether of 1,4-butanediol), and HELOXY Modifier 505 (polyglycidyl ether of castor oil). All of the epoxy-based film-former systems listed below have a viscosity below 50 cps at room temperature. The specified percentages are in weight percent (all percentages and ratios given throughout this specification are by weight, unless indicated otherwise).
(A) 100% HELOXY Modifier 67
(B) 98% HELOXY Modifier 67, 2% HELOXY Modifier 62
(C) 90% HELOXY Modifier 67, 10% HELOXY Modifier 62
(D) 98% HELOXY Modifier 67, 2% EPON Resin 160
(E) 90% HELOXY Modifier 67, 10% EPON Resin 160
(F) 98% HELOXY Modifier 67, 2% EPON Resin SU-2.5
(G) 90% HELOXY Modifier 67, 10% EPON Resin SU-2.5
(H) 97% HELOXY Modifier 67,3% HELOXY Modifier 505
(I) 100% HELOXY Modifier 62
(J) 70% HELOXY Modifier 62, 30% EPON Resin 8121
(K) 65% HELOXY Modifier 62,30% EPON Resin 8121, 5% EPON Resin SU- 2.5

### Example 5-High-Viscosity Epoxy: (not according to Claim 14)

In addition to the above-noted epoxy systems, an exemplary higher temperature, higher viscosity epoxy film-former system is a one-to-one mixture of DER 337 epoxy resin (available from Dow Chemical) and Araldite GT7031 (available from Ciba-Geigy Corp. of Switzerland). This film former has a viscosity of 350-450 cps at 200°F (93°C) as determined using a Brookfield viscometer.

### Example 6-Allyl Propoxylate Urethane: (not recording to Claim 14)

A 12-liter three-neck, round-bottom glass reactor equipped with a heating mantle, a Freidrich condenser, a 1-liter addition funnel, an electric overhead stirrer, and a thermocouple temperature probe was charged with 3.63 kg (21.6 mol) of Desmodur H (hexamethylenediisocyanate, available from Bayer Chemical of Pittsburgh, Pennsylvania). To this was added 0.5 g (50 ppm) of dibutyl tin dilaurate (available from Aldrich Chemical Company). Next, 6.37 kg (43.6 mol) of ARCAL Allyl Proproxylate 1375 (propoxylated allyl alcohol, available from Arco Chemical Company) was added via the addition funnel. The allyl propoxylate was added dropwise and the temperature was maintained at 80°C by varying the addition rate and the temperature of the heating mantle. When the addition was complete, the temperature of the reactor contents was maintained at 80°C for three (3) hours or for a time until the 2200 wave number peak in the infrared spectrum of the reaction mixture, corresponding to the isocyanate groups of the Desmodur H, disappeared. This film former may be used directly without any purification or further manipulation.

### Examples 7 and 8: Meltable Film Formers

### Example 7--Propoxlated Bisphenol-A Maleate/TONE 0260

The propoxylated bisphenol-A maleate from Example 2 was mixed with TONE 0260 (a polycaprolactone polymer available from Union Carbide) in a weight ratio of one-to-one. This mixture is a solid at room temperature, but has a viscosity of 50-250 cps at a temperature of 200-230°F (93 - 110°C).

### Example 8-Propoxlated Allyl Alcohol Maleate/TONE 0260

The propoxylated allyl alcohol maleate from Example 3 was mixed with TONE 0260 in a weight ratio of 1:1. This mixture is a solid at room temperature, but has a viscosity of 50-250 cps at a temperature of 200-230°F (93-110°C).

### Optional Ingredients

In addition to or instead of other viscosity modifiers such as those mentioned above, n-butyl amic acid may also be used as a modifier where it is suitably reactive with either thermoplastic or thermosetting materials to lower the viscosity of the film former and the overall chemical treatment. A preferred amic-acid reactive modifier was prepared as follows :
A 2-liter three-neck, round-bottom glass reactor equipped with a heating mantle, a Freidrich condenser, a 1-liter addition funnel, an electric overhead stirrer, and a thermocouple temperature probe was charged with 150 g (1.53 mol) of maleic anhydride (available from Huntsman Specialty Chemical) and 0.02 g of hydroquinone (available from Aldrich Chemical Co.). These solids were dissolved by the addition of 350 ml of acetone (high-purity grade available from Aldrich Chemical). The solution of maleic anhydride and hydroquinone was stirred in the reactor. A solution of 111 g (1.51 mol) of n-butyl amine (available from Aldrich Chemical) in 150 ml of acetone was added to the reactor. The n-butyl amine solution was added dropwise, and the temperature was maintained at 55°C by varying the addition rate and the temperature of the heating mantle. Once the addition was complete, the temperature of the reactor and contents was maintained at 60°C for three hours. The acetone was then removed at reduced pressure and 60°C by rotary evaporation. The solid n-butyl amic acid product was removed from the reactor as a liquid at 90°C, which may be used directly without further purification or manipulation. A small portion of the n-butyl amic acid produced was recrystallized from acetone. The melting point of the recrystallized material was 74.9°C by differential scanning calorimetry (DSC).

### Coupling Agents

For either a thermosetting or thermoplastic chemical treatment, the coupling agent comprises a functionalized organic substrate (i.e., at least one organic functional group bonded to an organic substrate). Exemplary types of functionalized organic substrates include alcohols; amines, esters, ethers, hydrocarbons, siloxanes, silazanes, silanes, lactams, lactones, anhydrides, carbenes, nitrenes, orthoesters, imides, enamines, imines, amides, imides, and olefins. The functionalized organic substrate is capable of interacting and/or reacting with the surface of the fibers at elevated temperatures (preferably, of from about 100°C (212°F) to about 350°C (662°F)) so as to produce sufficient coupling or bonding between the reinforcing fibers and matrix material to achieve the desired properties. Interaction involves bonding resulting from an attracting force, such as hydrogen bonding or Van der Waals bonding. Reacting involves chemical bonding, which is typically covalent bonding. The functionalized organic substrate can also be interactive or reactive with the matrix material. Exemplary coupling agents include silanes such as gamma-aminopropyltriethoxysilane (A-1100), gamma-methacryloxypropyltrimethoxysilane (A-174), and gamma-glycidoxypropyltrimethoxysilane (A-187), which are all available from Witco Chemical Company of Chicago, Illinois. Non-silane coupling agents may also be used. By choosing one or more suitable functionalized organic substrates for the coupling-agent system, the desired mechanical properties between the reinforcing fibers and the matrix material in the composite article can be obtained.

While not intending to be limited to any theory regarding the chemical treatments, a possible explanation of how the treatments may operate is provided below. Silane-type coupling agents are typically found in aqueous-based chemical treatments. Under a current view, with a conventional silane-type coupling agent the alkoxysilane portion of the molecule undergoes hydrolysis to become a hydroxysilane or silanol to water-solubilize the coupling agent. One end of the molecule reacts or interacts with the glass surface and the other end of the molecule reacts or interacts with the matrix material. More particularly, coupling agents that have typically been used in the glass industry are organosilanes, which have an organic portion thought to react or interact with the matrix polymer and a silane portion, or more specifically a silanol portion, thought to react or interact with the glass surface. Also, in some cases, it is generally accepted that the organic portion of an organosilane is capable of reacting (e.g., covalent or ionic bonding) or interacting (e.g., hydrogen or Van der Waals bonding) with the glass surface. In general, hydrogen bonding and other associations are thought to be thermodynamic (reversible under mild reaction conditions) processes. In some cases, such as when silanols bond to a glass surface, chemical bonding is considered a thermodynamic process. Thus, with previous coupling-agent technology, the bonding of aqueous-based chemical treatments to the glass occurs as a thermodynamic process. This is because conventional processes are usually conducted under relatively mild conditions and are usually reversible to a substantial degree. In a conventional process, after the glass fibers are coated with an aqueous-based chemical treatment, the coated fibers are packaged and dried in an oven. While in the oven there is a potential for some of the organic functional groups of the coupling agent to react irreversibly with some of the organic functional groups in the film former. This does not happen to any great extent, however, because the oven temperatures typically being used, about 150-190°F (66-88°C), are not high enough.

Contrastingly, with the solvent-free chemical treatments according to the present invention, the bonding or coupling process becomes more kinetic in nature. That is, the bonding may occur under relatively harsh conditions (e.g., at higher temperatures) and may involve a substantially irreversible reaction. Moreover, in addition to a coupling agent bonding to the fiber surface, an interphase region can now be formed between the reinforcing fibers and the matrix material of the composite article. The interphase region is formed, at least in part, by the applied chemical treatment. The interphase region may also include, in whole or in part, a region around the fiber where the chemical treatment and the matrix material have interacted and/or reacted with one another. The chemical treatment may also become completely dispersed or dissolved in the surrounding matrix material.

Although conventional silane coupling agents may be used in the present chemical treatments, it is believed that the mechanism of their interaction or reaction with the glass surface differs from that which occurs in prior processes. Since there is essentially no water present during the present processing, the alkoxysilanes react directly with the glass surface to give a siloxane linkage and liberate alcohol. Indeed, there is experimental evidence (proton NMR data) that suggests that the alkoxysilanes do not hydrolyze in the present chemical treatments under the conditions to which they are exposed when processed in accordance with the invention. It is believed that the alkoxysilane group of the coupling agent used in the present chemical treatments is reacting or interacting with the glass surface in a kinetic fashion to form a siloxane linkage and liberate alcohol. Thus, the present process is kinetic, rather than thermodynamic, as evidenced by the observation that good composite properties have been obtained for both thermoset and thermoplastic composites when alkoxysilane coupling agents were present in the chemical treatments according to the invention, whereas less desirable composite properties have been obtained for both thermoset and thermoplastic composites when alkoxysilane coupling agents were not present in the chemical treatments.

If an alkoxysilane coupling agent in a present chemical treatment reacts or interacts with a newly formed glass or other reinforcing fiber surface via some kinetic process, then other types of molecules containing sufficiently reactive functional groups, such as those noted above, will also react or interact with a glass or other reinforcing fiber surface via a kinetic process. Further, these same functional groups that react or interact with the glass or other fiber surface via a kinetic process may react or interact with the rest of the organic material in the chemical treatment and/or the matrix material via a kinetic process as well. This may then serve to build an interphase region at or very near the glass or other fiber surface, and may also serve to increase the average molecular weight of the chemical treatment, thereby imparting desirable physical characteristics to the resulting glass strand product. Thus, advantages of the present invention include the flexibility to use a wider variety of coupling agents and to build an interphase region between the fiber and the matrix.

For the composite article to exhibit desirable mechanical properties between the reinforcing fibers and the matrix material, the chemical treatment is preferably compatible with the matrix material of the composite article. In general, a chemical treatment is considered compatible with the matrix material if it is capable of interacting with and/or reacting with the matrix material. The film former of either type of applied chemical treatment may comprise the same polymeric material as the matrix material and be provided in an amount sufficient to form part or all of the matrix of the composite article.

The chemical treatments may be miscible in the matrix material, in whole or in part, and/or may form a separate phase from the matrix material. If a separate phase, the chemical treatment disposed around each fiber may form a plurality of separate phase regions dispersed in the matrix material and/or a single, separate phase region surrounding its corresponding fiber.

When it is desirable for the composite article to be made with one type of chemical treatment and a different type of matrix material, a thermosetting-type chemical treatment is preferably used with a thermoplastic matrix. A low molecular weight thermosetting-type chemical treatment can cure during thermoplastic processing and/or may react with the chain ends of the thermoplastic matrix material. Consequently, such types of molecules will not readily plasticize the thermoplastic matrix material. In choosing an appropriate chemical treatment, one should note that some low molecular weight thermoplastic materials can plasticize thermoplastic matrix resins when the chemical structure of the thermoplastic matrix resin and the low molecular weight thermoplastic material are very different. An example of such different thermoplastic materials is dibutylterephthalate as part of the chemical treatment and polypropylene as the matrix material.

Optionally, the chemical treatment may further comprise a compatibilizer for improving the interaction and/or reaction between the chemical treatment and the matrix material, thereby making otherwise non-compatible or less compatible polymeric components or ingredients of the treatment more compatible (e.g., more miscible) in the matrix material. When a thermosetting chemical treatment is used with a thermoplastic matrix material, exemplary compatibilizers include the PBT monomer equivalents di-n-butyl terephthalate and dibenzoate ester of 1,4-butanediol; the PET monomer equivalents diethyl terephthalate and dibenzoate ester of ethylene glycol; and the nylon monomer equivalents caprolactone, the adduct of adipoylchloride and n-aminohexane, and the adduct of 1,6-hexanediamine and hexanoylchloride.

When either type of chemical treatment is used with a thermosetting matrix material, it is preferable to use a more reactive compatibilizer. For example, for a polyester or vinylester thermoset, a suitable compatibilizer is glycidyl methacrylate end-capped diacids and esters of the trimellitic anhydride system. Specific examples of suitable compatibilizers for polyester and vinylester thermosets include diallylphthalate (DAP, which is commercially available), glycidylmethacrylate-capped isophthalic acid, trimellitic-anhydride-dodecinate, bis-allylalcohol adduct of terephthalic acid and CH₃CH₂(OCH₂CH₂)ₙ(CH₂)mCO₂H, where n is an integer from 3 to 7 and m is 16 (e.g., CBA-60, available from Witco Chemical of Chicago, Illinois). For epoxy-based thermosets, esters based on glycidol may be suitable compatibilizers, such as glycidylmethacrylate by itself, diglycidylester of adipic acid, and triglycidylisocyanurate (TGIC).

The chemical treatment may also include one or more processing aids to facilitate the use of the chemical treatment at some point during the manufacturing process and/or to optimize the properties of the resulting composite article. For a thermosetting-type chemical treatment, the processing aid can include, e.g., a viscosity reducer for reducing the viscosity of the thermosetting-type chemical treatment before it is applied to the fibers. The viscosity reducer is substantially solvent-free and preferably aids the curing of a thermosetting film former. The processing aids used in the thermosetting-type chemical treatment can include, e.g., styrene and peroxide. Styrenes are preferably used to thin the film former and participate in the thermoset reaction. Peroxides preferably function as a catalyst or curing agent.

Optionally, non-aqueous versions of other types of additives typically used to size glass fibers may also be employed as processing aids in the present chemical treatments. For example, processing aids or additives may be employed to help control the lubricity of the glass tow or strand, control the relative amount of static generated, or control the handleability of the glass strand or tow product. Lubricity may be modified by adding processing aids or lubricating agents, for example, a polyethyleneglycol ester emulsion in mineral oil (e.g., Emerlube 7440, available from Henkel Textile Technologies of Charlotte, North Carolina); polyethyleneglycols, e.g., PEG-400-MO (polyethylene glycol monooleate) and PEG-400-monoisostearate (available from the Henkel Corporation); and butoxyethylstearate (BES). These lubricating agents serve to enhance the runability of the glass by acting as lubricants, and when used judiciously should have little, if any, adverse affect on the properties of the finished composite article. Static generation may be controlled by adding processing aids such as polyethyleneimines, for example Emery 6760-O and Emery 6760-U (available from Henkel Corporation). Handleability may be enhanced with processing aids such as polyvinyl pyrrolidone (e.g., PVP K90, available from GAF Corporation of Wayne, New Jersey), which can provide good strand integrity and cohesiveness, and wetting agents or surfactants such as Pluronic L101 and Pluronic P105 (both available from BASF Corporation), which can improve the ability of the matrix material to wet the fibers. Any ingredient present, however, has a formulation and is added in an amount such that the chemical treatment remains solvent-free.

Preferred embodiments of methods for applying the inventive chemical treatments will now be further described in reference to the drawings. Fig. 1 illustrates one embodiment of an apparatus 20 for applying a chemical treatment to fibers 10 used in making a composite article, and includes a fiber-forming mechanism 22, such as a conventional glass fiber-forming bushing 24, which is operatively adapted according to well known practice for continuously forming a plurality of glass reinforcing fibers 12 from a source of molten glass-material in a melter above the bushing 24. In this exemplary process, the glass reinforcing fibers 12 emanate heat energy for a time after being formed. One or more applicators 26, such as a standard single- or dual-roll style applicator 28 and pan 30, can be used to apply one of the above-described exemplary chemical treatments to the reinforcing fibers 12 in order to form a plurality of coated fibers 32. For the process to continue to run after the chemical treatment is applied, i.e., without having a substantial number of the fibers 10 break, the viscosity of the chemical treatment is made to be sufficiently low before being applied or to drop a sufficient amount after being applied as discussed above.

Two alternative processes for applying chemical treatment to newly formed glass fibers 12 are described below. Exemplary Process 1 is used when the viscosity of the chemical treatment is relatively low at relatively low temperatures (e.g., viscosities of 150 cps or less at temperatures of 150°F (66°C) or less). Exemplary Process 2 is employed with higher-viscosity chemical treatments. Chemical treatments which include one of the film formers from the above Examples 1-4(K) and 6 may be used in Process 1. Chemical treatments which include one of the film formers from Examples 5, 7 and 8 may be used with Process 2. Any chemical treatment used in Process 1 can also be used in Process 2. Any chemical treatment that can be used in either Process 1 or Process 2 may also be used in Process 3, which is another exemplary system.

### Process 1:

This process for applying a chemical treatment employs conventional glass reinforcing fiber-forming equipment modified in the area around applicator 26 such that the position of the applicator 26 is adjustable in a plane perpendicular to the stream of the glass fibers 12 (i.e., the flow of fibers 10) as well as the plane containing the fibers 10. The applicator 26 is fixed to a wheeled cart by means of a cantilever arm. The cart is on rails so that it may be easily positioned along the axis perpendicular to the direction of flow of the fibers. The top of the cart is connected to the main body of the cart by a scissors jack and worm gear arrangement. This allows the applicator 26 to be raised or lowered relative to the bushing 24. The position of the applicator 26 can be adjusted along both axes while the process is running. The chemical treatment is stored in a metal pail, such as a 5-gallon (19 L) bucket. The chemical treatment is pumped to and from the applicator pan 30 by means of a peristaltic pump, such as a Masterflex model # 7529-8 equipped with a Masterflex pump controller model #7549-50 and Masterflex tubing part #6402-73, all available from Barnant Company (a division of Cole-Parmer in Barrington, Illinois). The applicator 26 is of a standard design for a glass fiber-forming process, and consists of a metal pan 30 supporting a single graphite roller 28 that is 3.0 inches (7.6 cm) in diameter and driven by an electric motor at speeds ranging from 3 to 20 feet (0.9 to 6.1 m) per minute. An alternative pump can be used to replace the peristaltic pump, such as a Zenith pump model #60-20000-0939-4, available from Parker Hannifin Corporation, Zenith Pump Division, Sanford, NC. This alternative pump is a gear-type pump equipped with a heated feed and return hose assembly, and generally has the following features: Teflon-lined, high-pressure, 0.222" (0.564 cm) inside diameter x 72" (183 cm) long, 12,000 psi (83 MPa) burst, 3000 psi (21 MPa) operating pressure, stainless steel, 7/16-20 thread JIC female swivel fittings, 120 volts, 300 watts, 100 ohm platinum RTD, 72" (183 cm) long cord with Amphenol #3106A-14S-06P plug, available from The Conrad Company, Inc., of Columbus, Ohio (the heated hose assembly is a difference between the two alternative (peristaltic vs. gear-type) pumping systems).

### Process 2:

In another exemplary process, a dual-roll applicator is used for applying high-viscosity, chemical treatments in non-aqueous form. The dual-roll applicator is fixed in position relative to the glass-forming apparatus. The position of the dual-roll applicator is essentially the same as that found in a standard glass fiber-forming process, which is approximately 50 inches (127 cm) from the bushing.

The dual-roll applicator includes a secondary applicator roll, which is the larger of the two rolls, for transferring and metering the chemical treatment to a smaller, primary applicator roll. The primary roll is used to directly apply the chemical treatment to the fibers. The relatively small diameter of the primary roll reduces the drag between the roll and the fibers by providing a reduced contact area therebetween. Tension in the fibers is also reduced due to the reduction in drag. The thickness of the applied chemical treatment may be metered by controlling the gap between the primary and secondary rolls and by providing a doctor blade on the smaller roll. Such a dual-roll applicator is disclosed in U.S. Patent No. 3,817,728 to Petersen and U.S. Patent No. 3,506,419 to Smith et al., the disclosures of which are herein incorporated by reference.

### Process 3:

In this preferred embodiment, a dual-roll applicator of Process 2 and the positional adjustment capability of Process 1 are used together, along with the above-described heating and pumping systems for the chemical treatment. The coated fibers 32 are gathered together into a strand 14 using a gathering mechanism 34, such as a conventional gathering shoe. A pulling mechanism 36, such as a conventional pair of opposing pull wheels, is used to continuously draw the fibers 12 from the bushing 24 in a manner well known in the art. The strand 14 can be wound on a package (not shown) or chopped into segments of desired length and stored for subsequent processing off-line into a composite article. Alternatively, the composite strand 14 can be processed directly into a composite article in-line with the gathering step.

In addition to the continuously formed reinforcing fibers 12, the fibers 10 can further comprise a plurality of matrix fibers 13 made from a suitable matrix material. If matrix fibers 13 are used, the step of applying the chemical treatment can include sizing and/or preimpregnating the matrix fibers 13 with the same or a different chemical treatment than that applied to the reinforcing fibers 12. If different types of matrix fibers 13 are used, it may also be preferable for a different chemical treatment to be applied to each type of matrix fiber 13. Likewise, if different types of reinforcing fibers 12 are used, it may be preferable for a different chemical treatment to be applied to each type of reinforcing fiber 12. The same techniques and equipment may be used to chemically treat each type of reinforcing fiber and matrix fiber, whether they are continuously formed or preformed.

### Chemical Treatment Examples

Provided below are examples of chemical treatments for applying to glass reinforcing fibers and various matrix fibers, and suitable for use with PBT, nylon, and polypropylene matrix resins. The various matrix fibers are made from the same material as the corresponding matrix resin. The designations "HEAT" and "NO HEAT" indicate that the listed chemical treatments are heated to a significant degree or not, respectively, after being applied to their corresponding fibers. The chemical treatments below for reinforcement fibers with "NO HEAT" may also be used on matrix fibers made from the corresponding matrix resin. When continuously formed glass fibers reach the applicator at a conventional location (e.g., the applicator being a significant distance from the source of molten glass), the glass fibers are still giving off some residual heat. At this distance from the bushing, however, the amount of heat emanating from the fibers may not be enough to 5 have any significant affect on some of the applied chemical treatments. The designation "NO HEAT" therefore covers such a situation.

### Example A (not according to the invention)

Composite matrix resin: PBT.

Formulation for reinforcement fibers:
(1) For HEAT: 83% HELOXY Modifier 67, 10% EPON SU-2.5, 5% maleic anhydride, and 2% A-1100;
(2) For NO HEAT: 95% HELOXY Modifier 67, 3% HELOXY Modifier 505, and 2% A-1100.

Formulation for matrix fibers:
(1) For HEAT: 83% HELOXY Modifier 67,10% EPON 160, and 7% DICY;
(2) For NO-HEAT: 83% HELOXY Modifier 67, 10% HELOXY Modifier 62, and 7% TGIC.

### Example B

Composite matrix resin: nylon.

Formulation for reinforcement fibers:
(1) For HEAT: 44.5% PG-fumarate with hydroxy terminal groups, 44.5% TONE 0260, 5% DESMODUR N-100, 5% BES, and 1% A-1100; (not according to claim 1)
(2) For NO HEAT: (a) 47% propoxylated bis-A maleate, 47% TONE 0260, 5% BES, and 1% A-1100; or (b) 99% allylpropoxylate urethane and 1% A-1100.

Formulation for matrix fibers : ((b) not according to claim 14)
(1) For HEAT: (a) 90% allylpropoxylate urethane and 10% amic acid; or (b) 90% allylpropoxylate urethane, 5% PG-fumarate (hydroxy-terminated), and 5% DESMODUR N-100; (not according to the invention)
(2) For NO-HEAT: 47.5% propoxylated bis-A maleate, 47.5% TONE 0260, and 5% BES.

### Example C

Composite matrix resin: polypropylene.

Formulation for reinforcement fibers:
(1) For HEAT: (a) 68% PG-fumarate, 20% propoxylated allylalcohol, 5% maleic anhydride, 5% TBPB, and 2% A-1100 or A-174; or (b) 83% PG-fumarate (hydroxy-terminated), 5% DESMODUR N-100, 5% maleic anhydride, 5% TBPB, and 2% A-1100 or A-174; (not according to claim 1)
(2) For NO-HEAT: (a) 88% allylpropoxylate urethane, 10% EPON 8121, and 2% A-1100; or (b) 90% allylpropoxylate urethane, 5% diallylphthalate, 2% maleic anhydride, 2% BPO, and 1% A-1100. (not according to claim 14)

Formulation for matrix fibers:
(1) For HEAT: 91 % allylpropoxylate urethane, 5% diallylphthalate, 2% maleic anhydride, and 2% TBPB; (not according to the invention)
(2) For NO-HEAT: (a) 90% allylpropoxylate urethane and 10% EPON 8121; or (b) 91% allylpropoxylate urethane, 5% diallylphthalate, 2% maleic anhydride, and 2% BPO. (not according to the invention)

The abbreviation DICY stands for dicyandiimide, which is a high-temperature amine-based curing agent for epoxy resins. Both the DICY curing agent and the reactive modifier diallylphthalate (for lowering viscosity) are available from the Aldrich Chemical Company. DESMODUR N-100 is a polyisocyanate available from Witco Chemical Company. The PG-fumarate, propoxylated bis-A maleate (propoxylated bisphenol-A maleate), allylpropoxylate-urethane, propoxylated ally alcohol, and amic acid (i.e., n-butyl amic acid) can all be prepared as described above. BES represents butoxyethylstearate, which may be replaced in the above chemical treatments, in whole or in part, by compounds such as the adduct of adipoylchloride and n-aminohexane or the adduct of 1,6-diaminohexane and hexanoylchloride, caprolactone (available from the Aldrich Chemical Co.), and amic acids, such as the n-butyl amic acid, and these alternative compounds may perform other functions in addition to that provided by the BES. TPBP and BPO are the peroxides t-butylperoxybenzoate and benzoyl peroxide, respectively, and are available from Akzo-Nobel Chemical Company of Chicago, Illinois. EPON 8121 is a bisphenol-A type epoxy resin available from Shell Chemical Company.

The chemical treatment of 99% allylpropoxylate-urethane and 1% A1100 was applied to glass fibers, the coated fibers were formed into a composite strand, the composite strand was wire coated or encased with a sheath of nylon thermoplastic matrix material, the encased composite strand was chopped into pellets, and the pellets were injection molded into composite test specimens. The encased composite pellets were formed using the inventive wire-coating process described further below. The glass fibers in these composite test specimens were not completely dispersed in the matrix material. This lack of complete dispersion of the glass fibers from individual strands in the finished composite article indicates that at least a portion of the chemical treatment reacted enough, at some point during the manufacturing process, to prevent the fibers from separating and dispersing into the molten matrix material during the molding of the composite article (i.e., to maintain strand cohesion). To reduce its reactivity (i.e., to reduce fiber cohesion in each composite strand during the composite-article molding process) and thereby obtain more dispersion of the reinforcing fibers in the matrix material, the allylpropoxylate-urethane may be diluted with another film former-e.g., for a nylon system, TONE 0260 (a polycaprolactone, available from Union Carbide Corp.) may be used.

The following are further examples of thermoset-type and thermoplastic-type chemical treatments according to the present invention.

### Nylon-Based Chemical Treatment: (not according to the invention)

An especially preferred nylon-based thermoplastic-type chemical treatment was prepared by depositing about 9 kg of a polycaprolactone, specifically TONE 0260 (available from Union Carbide Corporation), and about 9 kg of a polyester alkyd, specifically propoxylated bisphenol-A-maleate, into separate 5-gallon (19 L) metal cans. Upon the complete melting or liquefying of these two materials, they were combined in a heated five-gallon (19 L) can and stirred until the mixture became homogeneous. The temperature was maintained at or above 200°F (93°C) with constant stirring until complete mixing was achieved (about 30 minutes). The heating was then discontinued and the mixture was allowed to cool to 190°F (88°C). While the temperature was maintained at 190°F (88°C), about 360 g of the amine silane coupling agent A-1100 (gamma-aminopropyltriethoxysilane) was added to the mixture with constant stirring. The resulting chemical treatment contained, by weight, 49-49.5% TONE 0260, 49-49.5% propoxylated bisphenol-A-maleate, and 1-2% A-1100. This chemical treatment was solid at about 25°C and had a viscosity of 660 cps at 75°C, 260 cps at 100°C, 120 cps at 125°C, and 60 cps at 150°C.

The chemical treatment was then transferred with its container to a bucket heater described in Process 2 above, and pumped to a suitable applicator. Glass fibers 12 were attenuated and allowed to contact the applicator roll 28. The chemical treatment, at a temperature of about 115°C, was then transferred onto the glass fibers 12. The fibers 12 were gathered at a conventional shoe 34 and wound onto a collet, making a square-edged package, and allowed to cool.

The resulting package is stable and shippable, and the roving runs out well. The resulting composite strand 14 may be wire coated and chopped into pellets for eventual use in injection-molding applications.

### PBT-Based Chemical Treatment: (not according to the invention)

An especially preferred PBT-based thermoplastic-type chemical treatment was prepared by depositing 17.28 kg ofdiglycidyl ether of 1,4-butanediol (HELOXY 67) into a five-gallon (19 L) metal can. To this was added 540 g of polyglycidyl ether of castor oil (HELOXY 505). To this mixture was added 180 g of A-1100 (gamma-aminopropyltriethoxysilane) as a coupling agent. The resulting chemical treatment contained, by weight, 96% HELOXY 67, 3% HELOXY 505, and 1% A-1100. This mixture was stirred until it became homogeneous. Then it was transferred with its container to a bucket heater, such as that of Process 1 (although it is not necessary to heat this chemical treatment to process it). For applying this chemical treatment, the applicator 26 is raised to within 8-10 inches (20.32-25.4 cm) from the bushing 24.

### Polyester-or Vinylester-Based Chemical Treatment:

An especially preferred polyester- or vinylester-based thermoset-type chemical treatments is prepared by depositing 6.75 kg of DER 337 epoxy (a bisphenol-A epoxy resin, available from Dow Chemical Company) into a five-gallon (19 L) metal can. This material is heated to 220°F (104°C) and stirred until all of the solids completely liquefy. To this liquid is added 6.75 kg of Araldite GT7013 epoxy (a bisphenol A epoxy resin, available from Ciba Geigy Corporation). The Araldite is added slowly with a great deal of agitation over a period of two hours. Upon complete dissolution of the Araldite epoxy, the mixture is allowed to cool in air to 200°F (93°C), and 0.76 kg of Pluronic L101 (an ethylene oxide/propylene oxide copolymer surfactant, available from BASF) and 2.21 kg of Pluronic P105 (an ethylene oxide/propylene oxide copolymer surfactant, also available from BASF) are added. Also added at this time is 1 kg of PEG 400 MO (polyethylene glycol monooleate, available from Henkel Corporation) and 0.5 kg of butoxyethylstearate (BES) (available from Stepan Company ofNorthfield, Illinois). The mixture is allowed to cool further with continued stirring to a temperature of 160-170°F (71-77°C), at which point 2 kg of A-174 (gamma-methacryloxypropyltrimethoxysilane, available from Witco Chemical Corporation) is added. Finally, 20 g ofUvitex OB (a fluorescent brightening agent available from Ciba-Geigy of Hawthorne, New York) is added to the mixture with agitation to facilitate good dispersion. The resulting chemical treatment contains, by weight, 33.78% DER 337 epoxy, 33.78% Araldite GT7013 epoxy, 3.79% Pluronic L101, 11.05% Pluronic P105,5% PEG 400 MO, 2.5% BES, 0.10% Uvitex OB, and 10% A-174. The chemical treatment is then transferred with its container to a bucket heater as described in Process 2.

### Epoxy-Based Chemical Treatment: (not according to the invention)

The formulation for this example of a thermoset-type chemical treatment is as described above for polyester- and vinylester-based thermoset-type chemical treatments, except that A-187 (gamma-glycidoxypropyltrimethoxysilane, available from Witco Chemical Company) is used in place of A-174.

### Two-Silane, Polyester- or Vinylester-Based Chemical Treatment:

The formulation for this example of a thermoset-type treatment, which has multi-compatibility (compatibility with polyester, vinylester or epoxy), is as described for the polyester- or vinylester-based thermoset-type chemical treatment described above, except that the silane coupling system consists of 1.25 kg (5% by weight) A-187 and 1.25 kg (5% by weight) A- 174, in place of the A-174 alone.

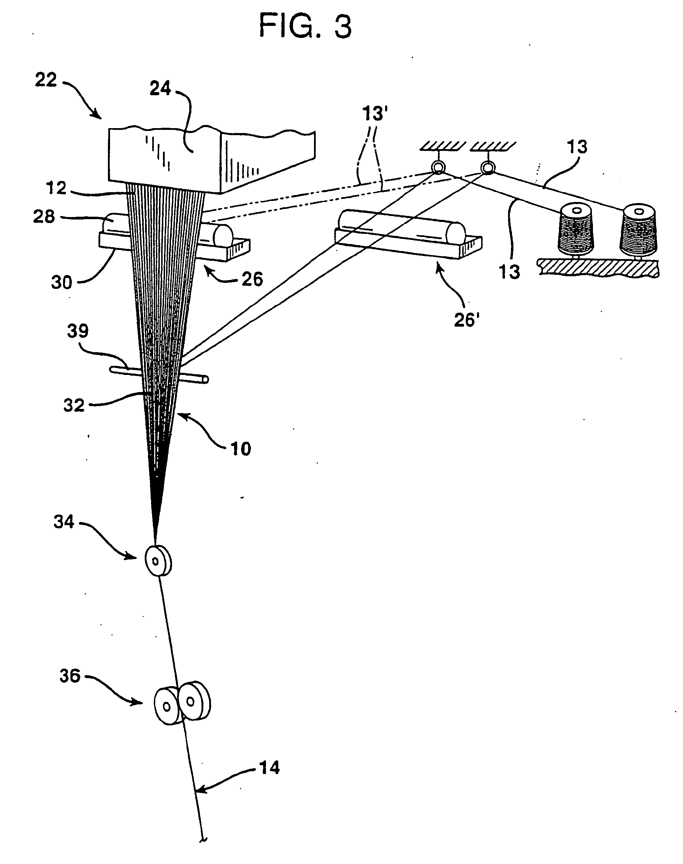

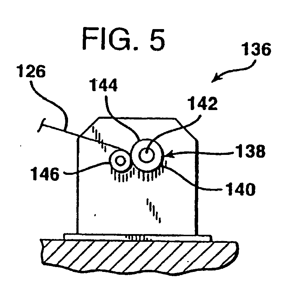

In the preferred embodiment shown in Fig. 3, matrix fibers 13 are preformed and then commingled with the reinforcing fibers 12 before being gathered into a composite strand 14. Alternatively, the matrix fibers 13 may be continuously formed in-line with the reinforcing fibers 12. The matrix fibers 13 ultimately form part or all of the matrix of a resulting composite article. The fibers 10 may comprise both continuously formed and preformed reinforcing fibers 12 or only preformed reinforcing fibers. If preformed reinforcing fibers 12 are used, they can be processed directly into a strand 14 containing only the preformed reinforcing fibers 12. Such preformed reinforcing fibers 12 can also be commingled with any other types of fibers in the same, or a similar, manner as the preformed matrix fibers 13 shown in Fig. 3. While only two spools or packages of preformed fibers are shown, it is understood that any suitable number of packages of preformed fibers can be supplied in the illustrated manner or another suitable manner.

The same applicator 26 can be used to chemically treat both the preformed fibers (e.g., the preformed matrix fibers indicated by the phantom lines 13') and the continuously formed fibers (e.g., the continuously formed reinforcing fibers 12) before the fibers are gathered into a strand 14. Alternatively, a separate applicator 26' can be used to chemically treat the preformed fibers (e.g., the preformed matrix fibers 13). If a separate applicator 26' is used, the gathering mechanism 34 may include a bar or roller 39 to help commingle the fibers 12 and 13 together before being gathered into a strand 14. Preformed fibers and continuously formed fibers may be chemically treated either together using the same applicator or separately using different applicators, e.g., as described in U.S. Patent Application Serial No. 08/527,601, filed September 13, 1995, the disclosure of which is incorporated by reference. Alternatively, some of the fibers 10, e.g., matrix fibers 13, may be gathered together with the coated fibers 32 without a chemical treatment first being applied.

The applied chemical treatment may be heated before, during, and/or after the step of gathering the fibers. If it behaves as a thermoset, the applied chemical treatment can be partially or fully heat cured at some point during the formation of the composite strand 14. How much and when an applied thermosetting-type chemical treatment is heat-cured depend on the type of composite article being made from the strand 14. For example, a composite strand 14, with full, partial, or no heat-curing of the applied chemical treatment, can be chopped into a plurality of short discrete lengths, mixed into a molding compound, and injection molded into a composite article.

For chopped lengths of strand 14, an applied chemical treatment is cured enough, if at all, to ensure that the short lengths of the composite strand 14 remain cohesive (i.e., that fibers 10 stay together) during subsequent processing. Where it behaves as a thermoset or is otherwise heat-curable, the applied chemical treatment on the coated fibers is preferably only partially cured during the forming of the composite strand 14. Curing of the applied chemical treatment is preferably completed in subsequent in-line or off-line processing (e.g., pultrusion, filament winding, transfer injection molding, compression molding, etc.) of the composite strand 14 into a composite article. A thermosetting-type chemical treatment preferably remains only partially cured until the forming of the composite article, because if the molecular weight of the chemical treatment approaches infinity (i.e., is maximized) during the forming of the composite strand 14, then the strand 14 may not be further processable in downstream composite-forming applications. Such partial curing may be accomplished by choosing ingredients which will not fully react with one another under the conditions present during the composite strand-forming process. It may also be accomplished by choosing the relative amounts of the reactive ingredients of the chemical treatment so that at least one of the thermosetting constituents in the chemical treatment (e.g., a resin) remains only partially reacted or cured until the forming of the composite article (e.g., by controlling the stoichiometry of the chemical treatment). An exemplary chemical treatment having at least one reactive constituent that can remain only partially reacted or cured during the strand-forming process comprises about 85% by weight PG-fumarate, about 10% by weight styrene, and about 5% by weight t-butylperoxybenzoate.

In the chemical treatments listed in Examples A-C above, there are several reactive species represented. While in most cases it is preferable for some unreacted chemical species to remain on the strand 14 at the end of the strand-forming process, it may be preferable in some cases, for example, in the above-listed chemical treatments that contain isocyanates or amic acids, for the chemical species to be fully reacted when in the strand form. With the isocyanates, if there is a diol present and in sufficient quantity (e.g., about 20 times the number of isocyanate groups) and if the chemical treatment is applied at a high enough fiber surface temperature, the isocyanate groups will be fully reacted in the composite strand 14. Likewise, if the reaction conditions are right (e.g., high temperature and relatively low concentration), the amic acid in a chemical treatment will likely be completely converted to imide:

A chemical treatment can be prepared that comprises about 45% by weight PG-fumarate, about 50% by weight styrene, and about 5% by weight t-butylperoxybenzoate. This represents a polyester resin formulation that may be applied to glass fibers using applicator equipment as described above in Processes 1-3 and that may cure to a hard mass on a glass fiber strand 14 upon the addition of heat emanating from newly formed glass fibers. By removing about 90% of the styrene, this polyester resin chemical treatment may be rendered only partially curable when applied to the fibers. An additional chemical treatment can be prepared that comprises about 35% by weight of the epoxy resin Epon 828, available from Shell Chemical Company, about 35% by weight of the reactive epoxy modifier HELOXY 505, about 28% by weight maleic anhydride, and about 2% by weight A1100. This epoxy resin formulation may be applied to glass fibers using any of the applicator equipment described above, and cures to a hard mass on a glass fiber strand 14 upon the addition of heat emanating from newly formed glass fibers. By removing about 90% to all of the maleic anhydride, this epoxy-resin chemical treatment may be rendered only partially curable when applied to the fibers.

By raising the applicator 26 to a position closer to the heat emanating from the molten glass (e.g., bushing 24), the viscosity of a thermoplastic-type chemical treatment on the surface of the applicator roll 28 (i.e., where the roll 28 comes in contact with the glass fibers 10) has been observed to drop, as well as that on the surface of the glass fibers 12. A thermosetting-type chemical treatment which behaves like a thermoplastic at this stage of the process will also experience such a lowering of its viscosity. Gradients in the viscosity of the chemical treatment have been observed along the surface of the applicator roll 28. The viscosity has been found to be the lowest behind the fan of glass fibers 10, and appears to increase toward either end of the roller 28.

For the Fig. 1 apparatus 20, the applicator 26 is positioned adjacent or otherwise close enough to the bushing 24 that the chemical treatment is applied when the fibers 12 are at a high enough temperature (i.e., the fibers 12 emanate enough heat energy) to cause the desired drop in the viscosity and/or the desired degree of heat curing by crosslinking or otherwise increasing the molecular weight of the applied chemical treatment. At the same time, the applicator 26 is preferably positioned far enough away from the bushing 24 so that the chemical treatment is applied while the fibers 12 are at a temperature which will not cause significant damage to the chemical treatment (e.g., decomposition of any organic chemicals or compounds). In this way, the resulting strand 14 can be provided with the properties desired for subsequent processing into a composite article.

Exemplary fiber temperatures for applying the chemical treatments are temperatures of up to about 350°C (662°F), with it possible to apply some treatments at even higher temperatures, without being significantly degraded or otherwise damaged. Fiber temperatures as low as about 150°C (302°F), or even lower, may be used. To protect the applied chemical treatment and cause at least one of the above two desired changes to occur in the applied chemical treatment, preferably the fibers 12 are at a temperature of from about 200°C (392°F) to about 300°C (572°F). Satisfactory results have been obtained when the viscosity of the chemical treatment of either type drops down to from about 200 cps to about 400 cps at a temperature of from about 200°C to about 300°C.

For glass reinforcing fibers 12 drawn from a conventional bushing 24 having a normal throughput, the applicator 28 is preferably disposed so that the chemical treatment is applied to the glass fibers 12 at a minimum of at least about 3 inches (7.62 cm), and typically about 6 inches (15.24 cm), or more from the bushing 24 (i.e., from where the fibers 12 exit the bushing). The chemical treatment may be applied to the glass reinforcing fibers 12 at a distance of from about 8 inches to about 10 inches (20.32 cm to 25.4 cm) from the bushing 24. The exact location of the applicator 26 relative to the bushing 24 depends, for example, on the type of bushing 24 used (e.g., the number of fibers being drawn from the bushing), the temperature of the molten glass material, the type of chemical treatment being applied, the desired properties of the interphase region around the reinforcing fibers 12, and the properties desired for the resulting strand 14 and ultimately for the composite article.

Referring to Fig. 2, an apparatus 38 includes the components of the previously described apparatus 20 and a heat retainer 40. Accordingly, components of apparatus 38 the same or similar to those of apparatus 20 have been designated with the same reference numerals. The heat retainer 40 is disposed, partially or completely, at least around the fibers 12 and is adapted using conventional techniques to maintain the heat energy emanating from the surface of the fibers 12 for a longer period of time and a farther distance from the fiber-forming mechanism 22. Satisfactory results have been obtained with a low-throughput glass fiber bushing 24 using an exemplary heat retainer 40 made from sheet metal formed into an open-ended rectangular box shape having a length of about 15 inches (38.1 cm), a width of about 3 inches (7.62 cm), and a height of about 16 inches (40.64 cm). A low-throughput glass fiber bushing 24 typically forms glass reinforcing fibers 12 at a rate of less than or equal to about 30-40 lbs./hr (13.62-18.16 kg/hr). The box-shaped heat retainer 40 is disposed between the fiber-forming mechanism 22 and the applicator 26 so that at least the fibers 12 are drawn through its open ends 42 and 44. Preferably the heat retainer 40 is sufficiently insulative to keep the surface of each fiber 12 at a temperature of from about 150°C (302°F) to about 350°C (662°F) by the time the applicator 26 applies the chemical treatment to the fibers 12.

The use of such a heat retainer 40 is particularly advantageous when a low-throughput continuous glass fiber forming bushing 24 is being used. The amount of heat energy being stored by the fibers 12 formed using a low-throughput bushing 24 is less than that stored by fibers 12 formed using a normal- or high-throughput bushing. Thus, the heat retainer 40 allows fibers 12 formed using a low-throughput bushing to be maintained at the temperature needed to cause the desired reaction (drop in viscosity and/or at least partial heat curing) in the applied chemical treatment. The heat retainer 40 may be modified to be disposed up to or even farther downline beyond the applicator 26 in order to maintain the fibers 12 at a desired elevated surface temperature at a point up to or downline from the applicator 26. For example, another heat retainer similar in structure to heat retainer 40 could be disposed, partially or completely, around the coated fibers 32 and between the applicator 26 and the gathering mechanism 34. The use of such an additional heat retainer may be desirable when additional curing of the chemical treatment is needed before the strand 14 is collected, for example on a spool, or otherwise subsequently processed. An example of a means that may be useful as such a heat retainer in the present invention, in particular, after the chemical treatment is applied to the fibers, is described in U.S. Patent No. 5,055,119, the disclosure of which is incorporated by reference herein.

The energy used in heating the applied chemical treatment is completely, provided by heat energy emanating from the coated fibers 32. For example, residual heat emanating from, or remaining in, the continuously formed glass fibers can provide a substantial amount of the heat energy. Residual heat emanating from continuously formed polymeric matrix fibers 13 may similarly be used to effect desired changes in an applied chemical treatment.

By using heat energy emanating from the fibers 32 to supply the necessary heat energy, the applied chemical treatment has its viscosity reduced and/or is at least partially heat-cured from the surface of the coated fibers 32 outwardly through at least part of the applied chemical treatment. Heating from the fiber surface outwardly is especially preferred and efficient way to heat the applied chemical treatment and to help optimize bonding between the chemical treatment and the surface of the coated fibers 32. In addition, heating from the surface of the coated fibers 32 outwardly allows for greater versatility in engineering the interphase region formed by the applied chemical treatment, between each of the coated fibers 32 and the matrix material of the composite article.

For example, heating an applied thermoplastic-type chemical treatment from the inside out helps to insure that its viscosity at the surface of the fibers will be low enough to obtain adequate wetting of the fiber surface. In addition, heating an applied heat-curable chemical treatment in this manner allows for the applied chemical treatment to be fully cured only at its interface with the fiber surface, thereby retaining an outer region of only partially cured or uncured chemical treatment, which can be fully cured when and where it is desired during subsequent processing. For instance, it may be desirable for this outer region to be partially cured or uncured to facilitate bonding between the chemical treatment and a subsequently applied matrix material or between the contacting layers of the applied chemical treatment on adjoining fibers.

Heat emanating from the fibers 12 is used to heat the applied chemical treatment.

The chemical treatment may be kept cool before it is applied to the fibers 12 to permit the use of very reactive ingredients and to help reduce the risk of heat-caused degradation of the chemical treatment. The temperature of the chemical treatment before being applied may be kept at less than or equal to about room temperature for the same reasons. The chemical treatment can be kept at the desired temperature by any suitable means. For example, a cooling coil (not shown) can be submerged within the chemical treatment. When continuously formed glass fibers are being formed, the apparatus may also be adapted so as to surround the glass fibers 12 with an inert atmosphere before the chemical treatment is applied. The inert atmosphere should help prevent moisture from accumulating on the surface of the fibers 12, thereby inhibiting moisture-induced cracking and moisture-caused passivation of potential reactive species on the glass fiber surface. An inert atmosphere may not be desired when a high-output bushing is used or any other time the temperature of the glass fibers is sufficiently high. The glass fibers 12 can be surrounded with an inert atmosphere by using the heat retainer 40 (see Fig. 2) or similar structure to surround the glass fibers, with piping of the inert atmosphere into the heat retainer 40 as the fibers 12 pass therethrough. Suitable inert atmospheres include, for example, one or a combination of nitrogen and argon gases.

An advantage of the inventive chemical treatments is that they may be processed using known fiber, strand, and composite-article forming equipment.

Through consideration of the above description and practice of the invention, appropriate modifications of the present invention will be apparent to those skilled in the art. Thus, the scope of the invention is intended not to be limited by the foregoing detailed description or depiction of preferred embodiments, but to be defined by the following claims.

## Claims

1. A method for preparing a composite product, comprising the steps of:
applying a thermosetting composition to a plurality of fibers including glass or synthetic reinforcing fibers to form fibers coated with applied composition, the composition being substantially solvent-free and substantially non-photosetting; and
heating the applied composition thereby to lower the viscosity of at least a portion of the applied composition or to cure at least partially the applied composition, or both, to form coated fibers,
**characterised in that** the energy used in heating the composition is completely provided by heat energy emanating from the plurality of fibers.

2. A method as defined in claim 1, wherein the composition is applied in an amount of 0.1 to 1% by weight to size the plurality of fibers.

3. A method as defined in claim 2, wherein the composition is applied in an amount of 2 to 25% by weight to preimpregnate the plurality of fibers.

4. A method as defined in claim 1, wherein the plurality of fibers further includes polymeric matrix fibers.

5. A method as defined in claim 1, wherein during the applying step the glass reinforcing fibers are at a temperature of 150 to 350°C.

6. A method as defined in claim 5, wherein the temperature is 200 to 300°C.

7. A method as defined in claim 1, wherein the reinforcing fibers include preformed reinforcing fibers, the method further comprising the step of pre-heating the preformed reinforcing fibers.

8. A method as defined in claim 1, further comprising a step of gathering the coated fibers together into a composite strand.

9. A method as defined in claim 8, wherein the composition contains an organic material and the composite strand has an organic material content of 2 to 25% by weight.

10. A method as defined in claim 8, further comprising the step of forming the composite strand into a composite article having the plurality of fibers disposed in a matrix formed at least in part by the applied composition.

11. A method as defined in claim 10, wherein the forming step is performed in-line with the gathering step.

12. A method as defined in claim 1, further comprising the step of commingling reinforcing fibers and matrix fibers to provide the plurality of fibers.

13. A method as defined in claim 12, wherein the applying step includes simultaneously coating the reinforcing fibers and the matrix fibers with the composition.

14. A thermosetting composition for applying to fibers for processing into a composite strand useful for disposing in a matrix material to form a fiber-reinforced composite article by a method according to any one of claims 1 to 13, the composition comprising:
a film former comprising at least one of a multi-functional monomer and a low molecular weight mono-functional monomer; and
a coupling agent comprising a functionalized organic substrate; wherein the composition is at least partially heat curable, substantially solvent-free, and substantially non-photosetting, **characterised in that** the film former comprises a monomer selected from polyester alkyds, vinyl esters, amic acid, Diels Alder reactive species and Cope-rearranging compounds

15. A composition as defined in claim 14, further comprising a processing aid.

16. A composition as defined in claim 15, wherein the processing aid includes an epoxy-functional viscosity modifier.

17. A composition as defined in claim 15, wherein the processing aid includes butoxyethylstearate.

18. A composition as defined in claim 14, which is heat-curable at a temperature of 150 to 350°C.

19. A composition as defined in claim 14, having a viscosity of up to about 300 cps at a temperature of 93 to 110°C.

## Patentansprüche

1. Verfahren zur Herstellung eines Verbundwerkstoffprodukts, das die folgenden Schritte umfasst:
Auftragen einer wärmehärtbaren Zusammensetzung auf eine Mehrzahl von Fasern, einschließlich Glasfasern oder synthetisch verstärkte Fasern, um Fasern zu bilden, die mit der aufgetragenen chemischen Zusammensetzung beschichtet sind, wobei die Zusammensetzung im Wesentlichen lösemittelfrei und im Wesentlichen nicht lichthärtbar ist; und
Erwärmen der aufgetragenen Zusammensetzung, um **dadurch** die Viskosität wenigstens eines Abschnitts der aufgetragenen Zusammensetzung zu senken, oder um die aufgetragene Zusammensetzung wenigstens teilweise zu härten, oder beides, um beschichtete Fasern zu bilden,
**dadurch gekennzeichnet, dass** die Energie, die verwendet wird, um die Zusammensetzung zu erwärmen, vollständig von der Wärmeenergie bereitgestellt wird, die von der Mehrzahl der Fasern ausgestrahlt wird.

2. Verfahren nach Anspruch 1, wobei die Zusammensetzung in einer Menge von 0,1 Gew.-% bis 1 Gew.-% aufgetragen wird, um die Mehrzahl der Fasern zu dimensionieren.

3. Verfahren nach Anspruch 2, wobei die Zusammensetzung in einer Menge von 2 Gew.-% bis 25 Gew.-% aufgetragen wird, um die Mehrzahl der Fasern vorzuimprägnieren.

4. Verfahren nach Anspruch 1, wobei die Mehrzahl der Fasern ferner Polymermatrixfasern enthält.

5. Verfahren nach Anspruch 1, wobei während des Schritts des Auftragens die Glasverstärkungsfasern eine Temperatur von 150 °C bis 350 °C aufweisen.

6. Verfahren nach Anspruch 5, wobei die Temperatur 200 °C bis 300 °C beträgt.

7. Verfahren nach Anspruch 1, wobei die Verstärkungsfasern vorgeformte Verstärkungsfasern enthalten, wobei das Verfahren ferner den Schritt des Vorerwärmens der vorgeformten Verstärkungsfasern umfasst.

8. Verfahren nach Anspruch 1, das ferner einen Schritt des Zusammenlegens der beschichteten Faser zu einem Verbundwerkstoffstrang umfasst.

9. Verfahren nach Anspruch 8, wobei die Zusammensetzung ein organisches Material enthält und der Verbundwerkstoffstrang einen Gehalt an organischem Material von 2 Gew.-% bis 25 Gew.-% ausweist.

10. Verfahren nach Anspruch 8, das ferner den Schritt des Formens des Verbundwerkstoffstrangs in einen Verbundwerkstoffgegenstand umfasst, wobei die Mehrzahl der Fasern in einer Matrix angeordnet sind, die wenigstens teilweise aus der aufgetragenen Zusammensetzung gebildet wird.

11. Verfahren nach Anspruch 10, wobei der Schritt des Formens inline mit dem Schritt des Zusammenlegens ausgeführt wird.

12. Verfahren nach Anspruch 1, das ferner den Schritt des Kombinierens von Verstärkungsfasern und Matrixfasern umfasst, um die Mehrzahl von Fasern bereitzustellen.

13. Verfahren nach Anspruch 12, wobei der Schritt des Auftragens das gleichzeitige Beschichten der Verstärkungsfasern und der Matrixfasern mit der Zusammensetzung enthält.

14. Wärmehärtende Zusammensetzung zum Auftragen auf Fasern zum Verarbeiten zu einem Verbundwerkstoffstrang, der geeignet ist, um in einem Matrixmaterial angeordnet zu werden, um durch ein Verfahren nach einem der Ansprüche 1 bis 13 einen faserverstärkten Verbundwerkstoffgegenstand zu bilden, wobei die Zusammensetzung umfasst:
einen Filmbildner, der wenigstens ein multifunktionales Monomer oder ein monofunktionales Monomer von geringer Molekülmasse umfasst; und
ein Haftmittel, das ein funktionalisiertes organisches Substrat umfasst;
wobei die Zusammensetzung wenigstens teilweise hitzehärtbar, im Wesentlichen lösemittelfrei und im Wesentlichen nicht lichthärtbar ist, **dadurch gekennzeichnet, dass** der Filmbildner ein Monomer umfasst, das ausgewählt ist aus Polyesteralkyd, Vinylestern, Carbamoylcarbonsäure, reaktiven Diels-Alder-Spezies und Cope-Umlagerungsverbindungen.

15. Zusammensetzung nach Anspruch 14, die ferner ein Verarbeitungshilfsmittel umfasst.

16. Zusammensetzung nach Anspruch 15, wobei das Verarbeitungshilfsmittel ein epoxy-funktionales Viskositätsmodifikationsmittel enthält.

17. Zusammensetzung nach Anspruch 15, wobei das Verarbeitungshilfsmittel Butoxyethylstearat enthält.

18. Zusammensetzung nach Anspruch 14, welche bei einer Temperatur von 150 °C bis 350 °C hitzehärtbar ist.

19. Zusammensetzung nach Anspruch 14, die eine Viskosität von bis zu etwa 300 cps bei einer Temperatur von 93 bis 110 °C aufweist.

## Revendications

1. Procédé de préparation d'un produit composite, comprenant les étapes qui consistent à:
appliquer une composition thermodurcissable à de multiples fibres comprenant des fibres de renforcement en verre ou synthétiques pour former des fibres enrobées de la composition appliquée, la composition étant sensiblement exempte de solvant et sensiblement non photodurcissable; et
chauffer la composition appliquée pour ainsi diminuer la viscosité d'une partie au moins de la composition appliquée ou durcir au moins partiellement la composition appliquée, ou les deux, afin de former des fibres enrobées,
**caractérisé en ce que** l'énergie utilisée pour chauffer la composition est entièrement fournie par l'énergie thermique qui émane des multiples fibres.

2. Procédé tel que défini dans la revendication 1, dans lequel la composition est appliquée en une quantité de 0,1 à 1% en poids pour réaliser l'ensimage des multiples fibres.

3. Procédé tel que défini dans la revendication 2, dans lequel la composition est appliquée en une quantité de 2 à 25% en poids pour préimprégner les multiples fibres.

4. Procédé tel que défini dans la revendication 1, dans lequel les multiples fibres comprennent également des fibres de matrice polymères.

5. Procédé tel que défini dans la revendication 1, dans lequel pendant l'étape d'application, les fibres de renforcement en verre sont à une température de 150 à 350°C.

6. Procédé tel que défini dans la revendication 5, dans lequel la température est de 200 à 300°C.

7. Procédé tel que défini dans la revendication 1, dans lequel les fibres de renforcement comprennent des fibres de renforcement préformées, le procédé comprenant, en outre, l'étape de préchauffage des fibres de renforcement préformées.

8. Procédé tel que défini dans la revendication 1, comprenant également une étape de regroupement des fibres enrobées pour former un fil de base composite.

9. Procédé tel que défini dans la revendication 8, dans lequel la composition contient une matière organique et le fil de base composite a une teneur en matière organique de 2 à 25% en poids.

10. Procédé tel que défini dans la revendication 8, comprenant également l'étape qui consiste à transformer le fil de base composite en un objet composite dans lequel les multiples fibres sont disposées dans une matrice formée au moins en partie par la composition appliquée.

11. Procédé tel que défini dans la revendication 10, dans lequel l'étape de transformation est réalisée dans la continuité avec l'étape de regroupement.

12. Procédé tel que défini dans la revendication 1, comprenant également l'étape qui consiste à entremêler des fibres de renforcement et des fibres de matrice pour former les multiples fibres.

13. Procédé tel que défini dans la revendication 12, dans lequel l'étape d'application comprend l'enrobage simultané des fibres de renforcement et des fibres de matrice avec la composition.

14. Composition thermodurcissable destinée à être appliquée à des fibres en vue de leur transformation en un fil de base composite destiné à être disposé dans une matière formant matrice pour former un objet composite renforcé de fibres à l'aide d'un procédé selon l'une quelconque des revendications 1 à 13, la composition comprenant:
un agent filmogène comprenant un monomère multifonction et/ou un monomère monofonction à faible poids moléculaire; et
un agent de pontage comprenant un substrat organique fonctionnalisé;
la composition étant au moins partiellement durcissable à la chaleur, sensiblement exempte de solvant et sensiblement non photodurcissable,
**caractérisée en ce que** l'agent filmogène comprend un monomère choisi dans le groupe constitué par des polyesters alkydes, des esters vinyliques, l'acide amique, les espèces réactives de Diels Alder et les composés de réarrangement de Cope.

15. Composition telle que définie dans la revendication 14, comprenant également un auxiliaire de traitement.

16. Composition telle que définie dans la revendication 15, dans laquelle l'auxiliaire de traitement comprend un modificateur de viscosité à fonctionnalité époxy.

17. Composition telle que définie dans la revendication 15, dans laquelle l'auxiliaire de traitement comprend du stéarate de butoxyéthyle.

18. Composition telle que définie dans la revendication 14, qui est thermodurcissable à une température de 150 à 350°C.

19. Composition telle que définie dans la revendication 14, ayant une viscosité allant jusqu'à environ 300 cps à une température de 93 à 110°C.
